# EUROPÄISCHE PATENTANMELDUNG

(11) **EP 3 112 037 A1**
(43) Veröffentlichungstag der Anmeldung: **04.01.2017**
(21) Anmeldenummer: 16175448.6
(22) Anmeldetag: 21.04.2011
(51) Int. Cl.: B08B 1/04, B08B 3/02, B08B 3/04, A46B 13/06, A46B 11/06, A46B 13/00, F24J 2/46

(54) **REINIGUNGSVORRICHTUNG FÜR SOLARANLAGEN**

(30) Priorität: 23.04.2010 DE 102010018011
(62) Teilanmeldung aus: 11003387.5
(71) Anmelder: Jäger, Anton, 89250 Senden (DE)
(72) Erfinder: Jäger, Anton, 89250 Senden (DE)
(74) Vertreter: Manitz, Finsterwald & Partner GbR

(57) **Zusammenfassung**

Die Erfindung betrifft eine Reinigungsvorrichtung, insbesondere zum Reinigen von Solar- oder Photovoltaikanlagenflächen, mit einem Träger (11), wenigstens einer an dem Träger (11) drehbar gelagerten Reinigungswalze (13), und einem Drehantrieb (15, 17) für die Reinigungswalze (13), wobei der Drehantrieb (15, 17) als Fluidantrieb ausgebildet ist, bei dem die Strömung eines der Reinigungswalze (13) zu Reinigungszwecken zugeführten Reinigungsfluids in eine Antriebsbewegung für die Reinigungswalze (13) umgesetzt wird.

## Beschreibung

Die Erfindung betrifft eine Reinigungsvorrichtung, insbesondere zum Reinigen von Solar- oder Photovoltaikanlageflächen, mit einem Träger, wenigstens einer an dem Träger drehbar gelagerten Reinigungswalze, und einem Drehantrieb für die Reinigungswalze.

Derartige Reinigungsvorrichtungen sind grundsätzlich bekannt, wobei ein elektrischer Antrieb vorgesehen ist, um die Reinigungswalze in Rotation zu versetzen. Kosten und Eigengewicht einer derartigen Vorrichtung sind allerdings relativ hoch, weshalb sie im Grunde weder für Privathaushalte noch zum Reinigen von in der Praxis regelmäßig geneigten Solar- bzw. Photovoltaikanlagenflächen auf Gebäudedächern besonders geeignet ist.

Aufgabe der Erfindung ist es, eine Reinigungsvorrichtung der eingangs genannten Art zu schaffen, die bei zuverlässiger Funktionsweise kostengünstig herstellbar ist und ein möglichst geringes Eigengewicht aufweist.

Die Lösung dieser Aufgabe erfolgt durch die Merkmale des Anspruchs 1.

Erfindungsgemäß ist der Drehantrieb der Reinigungsvorrichtung als ein Fluidantrieb ausgebildet, bei dem die Strömung eines der Reinigungswalze zu Reinigungszwecken zugeführten Reinigungsfluids in eine Antriebsbewegung für die Reinigungswalze umgesetzt wird.

Durch die Erfindung kann auf einen wie auch immer gearteten zusätzlichen Antrieb für die Reinigungswalze, insbesondere auf einen Elektromotor, verzichtet werden. Die erfindungsgemäße Reinigungsvorrichtung kann hierdurch kostengünstig und mit geringem Eigengewicht hergestellt werden.

Die Erfindung betrifft außerdem die Verwendung zweier Fluidantriebseinheiten von Tellerwaschbürsten als Drehantrieb für eine an einem Träger drehbar gelagerte Reinigungswalze, wobei die beiden Fluidantriebseinheiten mit unterschiedlichem Drehsinn versehen und ansonsten baugleich ausgeführt sind. Bevorzugt werden die beiden Fluidantriebseinheiten als gleichzeitig im Bereich beider Stirnseiten der Reinigungswalze wirksamer Drehantrieb verwendet.

Gemäß einem bevorzugten Ausführungsbeispiel ist der Drehantrieb nach dem Prinzip eines Fluidantriebs für eine Tellerwaschbürste ausgebildet. Tellerwaschbürsten mit Fluidantrieb sind grundsätzlich bekannt. Die z.B. mit einer Beborstung versehene wirksame Fläche einer solchen Tellerwaschbürste wird von der Flachseite einer rotierenden Scheibe gebildet, die mittels des Fluids in Rotation versetzt werden kann. Eine Reinigungswalze ist nun gerade nicht stirnseitig, sondern auf ihrer Umfangsseite mit einer Beborstung oder einer anderen zum Reinigen geeigneten Ausstattung versehen. Es wurde jedoch von dem Erfinder erkannt, dass das von einer Tellerwaschbürste bekannte Prinzip eines Fluidantriebs auch für den Drehantrieb einer Reinigungswalze genutzt werden kann, wenn die Reinigungswalze stirnseitig mit dem Drehantrieb der Tellerwaschbürste gekoppelt wird. Es wird also die drehangetriebene Reinigungsscheibe einer Tellerwaschbürste durch eine Reinigungswalze ersetzt, während gleichzeitig die "stirnseitige" Beborstung der Arbeitsscheibe durch die umfangsseitige Beborstung der Reinigungswalze ersetzt wird.

Gemäß einer weiteren bevorzugten Ausgestaltung der Erfindung ist der Drehantrieb ein Bestandteil des Trägers. Hierdurch kann der Drehantrieb gleichzeitig zum Halten der Reinigungswalze verwendet werden.

Bevorzugt ist der Drehantrieb dazu ausgebildet, die Reinigungswalze an zumindest einer Stirnseite, bevorzugt an beiden Stirnseiten, zu halten.

Insbesondere kann der Träger als Gabel mit vom Drehantrieb gebildeten Zinken zum Halten der Reinigungswalze ausgebildet sein, wobei bevorzugt der Drehantrieb zwei Antriebseinheiten umfasst, die jeweils eine Zinke bilden.

Des Weiteren ist bevorzugt vorgesehen, dass der Drehantrieb gleichzeitig im Bereich beider Stirnseiten der Reinigungswalze wirksam ist.

In einer weiteren Ausgestaltung der Erfindung kann vorgesehen sein, dass der Drehantrieb zwei mit unterschiedlichem Drehsinn versehene und ansonsten baugleich ausgeführte Antriebseinheiten umfasst.

Die Erfindung ermöglicht es also in einem bevorzugten Ausführungsbeispiel, die Reinigungswalze gleichzeitig an beiden Stirnseiten mittels herkömmlicher Fluidantriebe in Rotation zu versetzen, wobei diese Antriebseinheiten gleichzeitig zum Halten und zur Drehlagerung der Reinigungswalze dienen. Eine erfindungsgemäße Reinigungsvorrichtung kann hierdurch äußerst kostengünstig und mit relativ geringem Eigengewicht realisiert werden, ohne Einbußen an Zuverlässigkeit und Funktionsfähigkeit hinnehmen zu müssen. Bekannte Fluidantriebe sind ohne weiteres in der Lage, selbst im Niederdruckbereich von beispielsweise bis zu etwa 5 bar eine ausreichend hohe Antriebskraft zur Verfügung zu stellen. Hohe Drehzahlen von mehreren 1.000 Umdrehungen pro Minute lassen sich mit bekannten Fluidantrieben realisieren. Mittels eines nachgeordneten Getriebes kann hieraus eine beispielsweise für die erfindungsgemäße Reinigungswalze geeignete Drehzahl abgeleitet werden. In bekannten Tellerwaschbürsten werden derartige Getriebe eingesetzt.

Da bei Verwendung bekannter Fluidantriebe für Tellerwaschbürsten an den beiden Stirnseiten der Reinigungswalze diese Fluidantriebe mit einander zugewandten wirksamen Seiten anzuordnen sind, ist es erforderlich, dass die beiden Antriebseinheiten einen unterschiedlichen Drehsinn aufweisen. Der Drehsinn derartiger Fluidantriebe kann durch einen mit nur geringem Aufwand verbundenen Umbau realisiert werden, so dass sich die Herstellungskosten nicht wesentlich erhöhen, wenn die zu verwendenden Fluidantriebe nicht ohnehin von vornherein in beiden Drehsinn-Varianten erhältlich sind.

Bei entsprechend stabiler Ausgestaltung des Trägers und gegebenenfalls des einen Bestandteil des Trägers bildenden Drehantriebs z.B. in Form zweier nach Art von Zinken einer Gabel stirnseitig mit der Reinigungswalze gekoppelter Antriebseinheiten kann es genügen, wenn die Reinigungswalze ausschließlich durch den Drehantrieb gehalten wird. Alternativ oder zusätzlich können Querverbindungen vorgesehen sein, die insbesondere die Reinigungswalze durchsetzen. Beispielsweise werden durch derartige Querverbindungen die "Zinken" der Halte- oder Trägergabel im Bereich der freien Enden oder in zwischen den freien Enden und der an der Basis der Zinken vorhandenen Querhalterung miteinander verbunden, um auf diese Weise dem Träger eine jeweils gewünschte Stabilität bzw. Festigkeit zu verleihen.

Wenn mehr als eine Antriebseinheit für den Drehantrieb der Reinigungswalze vorgesehen ist, dann kann gemäß einer Weiterbildung der Erfindung vorgesehen sein, dass der Träger eine bevorzugt im Wesentlichen parallel zur Drehachse der Reinigungswalze verlaufende Halterung für die Antriebseinheit umfasst, die als gemeinsame Fluidzufuhr für die Antriebseinheit ausgebildet ist.

Der Träger kann somit einen Bestandteil der Fluidzufuhr bilden, und umgekehrt.

Gemäß einer Weiterbildung der Erfindung ist der Drehantrieb, insbesondere jede Antriebseinheit, dazu ausgebildet, das Reinigungsfluid dem Inneren der Reinigungswalze stirnseitig zuzuführen. Zusatzmaßnahmen zum Zuführen des Reinigungsfluids in das Innere der Walze sind folglich hierbei nicht erforderlich. Das Austreten des Reinigungsfluids durch im Walzenmantel ausgebildete Austrittsöffnungen kann daher auf vergleichsweise kostengünstige und einfache Weise realisiert werden.

Insbesondere kann vorgesehen sein, dass der Drehantrieb, insbesondere jede Antriebseinheit, einen Arbeitsraum umfasst, dem das Fluid zugeführt und in dem die Fluidströmung in die Antriebsbewegung umgesetzt wird, wobei der Arbeitsraum mit dem Inneren der Reinigungswalze kommuniziert. Hierbei ist folglich vorgesehen, dass zunächst dem Reinigungsfluid kinetische Energie für den Drehantrieb der Reinigungswalze entzogen wird, woraufhin das Reinigungsfluid über den Arbeitsraum, in welchem dieser Energieübertrag erfolgt, in geeigneter Weise dem Inneren der Reinigungswalze zugeführt wird, um anschließend in der jeweils durch die Ausgestaltung der Reinigungswalze vorgegebenen Weise nach außen abgegeben zu werden.

Weitere Ausgestaltungen der Erfindung sind auch in den abhängigen Ansprüchen, der Beschreibung sowie der Zeichnungen angegeben.

Die Erfindung wird im Folgenden beispielhaft unter Bezugnahme auf die Zeichnung beschrieben. Es zeigen:
- Fig. 1: schematisch eine Ausführungsform einer erfindungsgemäßen Reinigungsvorrichtung,
- Fig. 2: schematisch den grundsätzlichen Aufbau einer Fluidantriebseinheit, wie sie für eine erfindungsgemäße Reinigungsvorrichtung verwendbar ist, und
- Fig. 3: eine Fluidantriebseinheit entsprechend derjenigen von Fig. 2 mit entgegengesetztem Drehsinn.

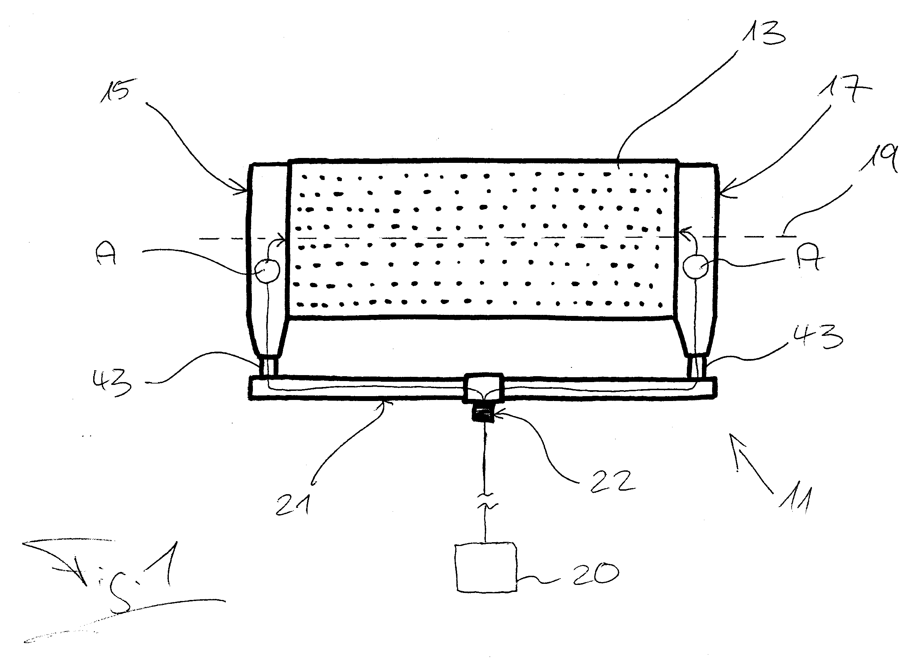

Die in Fig. 1 dargestellte erfindungsgemäße Reinigungsvorrichtung umfasst eine zylindrische Reinigungswalze, die an ihrer Umfangsfläche mit einer auf den jeweiligen Reinigungszweck zugeschnittenen Ausstattung versehen ist, beispielsweise mit einer Beborstung. Zusätzlich sind im z.B. die Beborstung tragenden Walzenmantel Austrittsöffnungen für ein Reinigungsfluid, insbesondere Wasser, vorgesehen.

Halterung und Drehantrieb der Reinigungswalze 13 erfolgen in diesem Ausführungsbeispiel durch zwei Antriebseinheiten 15, 17, auf die nachstehend näher eingegangen wird. Diese Antriebseinheiten 15, 17 dienen gleichzeitig als Fluidzufuhr und sind hierzu über Anschlüsse 43 an eine gemeinsame Halterung 21 angeschlossen, die sich parallel zur Drehachse 19 der Reinigungswalze 13 erstreckt. Zusammen mit der Halterung 21 bilden die beiden Antriebseinheiten 15, 17 einen Träger 11 für die Reinigungswalze 13.

Die Halterung 21 ist über einen Anschluss 22 insbesondere an einen handelsüblichen Hochdruckreiniger 20 anschließbar, so dass die erfindungsgemäße Reinigungsvorrichtung auch für Privathaushalte interessant ist.

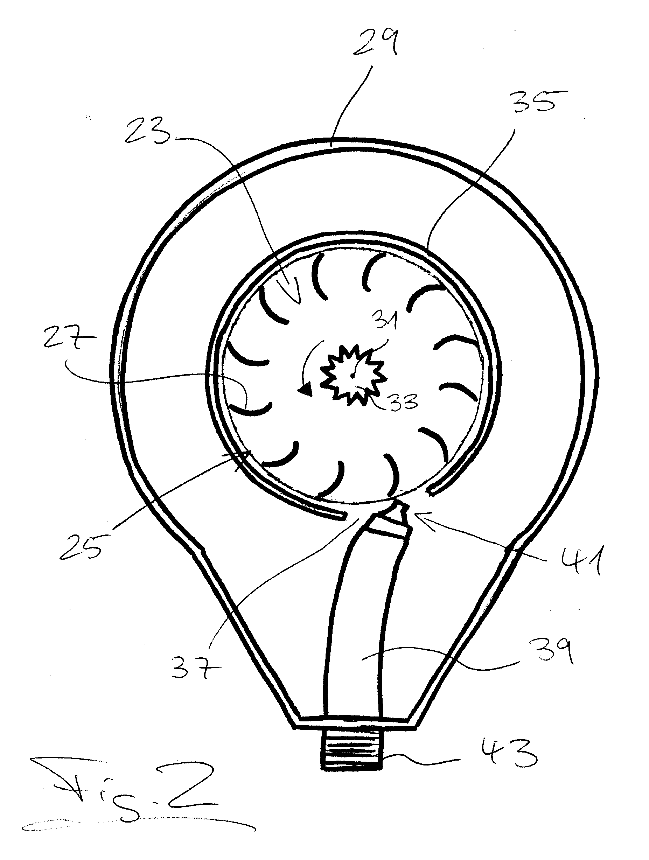

Der Strömungsweg des Reinigungsfluids durch die Halterung 21 und die Antriebseinheiten 15, 17 in das Innere der Reinigungswalze 13 hinein ist durch die Pfeile in Fig. 1 angedeutet. Mit "A" ist in den Antriebseinheiten 15, 17 jeweils angedeutet, dass das Reinigungsfluid dort insofern Arbeit verrichtet, als ihm in einer nachstehend in Verbindung mit Fig. 2 erläuterten Turbine kinetische Energie entzogen wird, um hierdurch einen Drehantrieb der Reinigungswalze 13 zu realisieren.

Insofern erfüllen die Antriebseinheiten 15, 17 jeweils eine Dreifachfunktion, indem sie die Reinigungswalze 13 halten und drehbar lagern, für die Zufuhr des Fluids in das Innere der Reinigungswalze 13 sorgen und außerdem den Drehantrieb für die Reinigungswalze 13 realisieren.

Wie im Einleitungsteil erwähnt, können Halterung und Drehlagerung der Reinigungswalze 13 ausschließlich durch die gewissermaßen die "Zinken" eines insgesamt gabelartigen Trägers 11 bildenden Antriebseinheiten 15, 17 besorgt werden. Die Halterungs- und/oder Lagerungsfunktion für die Reinigungswalze 13 kann aber zumindest zum Teil auch auf andere Art und Weise realisiert werden, beispielsweise mittels die Reinigungswalze 13 durchsetzender Querverstrebungen, die für die nötige oder für zusätzliche Stabilität bzw. Festigkeit sorgen. Bei entsprechend stabiler Ausgestaltung des Querträgers 21 ist es aber möglich, die Reinigungswalze 13 ausschließlich mittels der beiden stirnseitig angreifenden Antriebseinheiten 15, 17 zu halten und bezüglich der Rotation um die Drehachse 19 zu lagern.

Der Durchmesser der Reinigungswalze 13 liegt beispielsweise bei etwa 200 mm, was sich insbesondere für die Reinigung von Solar- oder Photovoltaikanlageflächen als besonders geeignet herausgestellt hat. Mit dem geschilderten Aufbau der Reinigungsvorrichtung können problemlos unterschiedliche Arbeitsbreiten, d.h. Abmessungen der Reinigungswalze 13 entlang ihrer Längsachse 19, realisiert werden, die beispielsweise zwischen etwa 500 mm und 1.000 mm liegen. Hierdurch kann in vorteilhafter Weise eine Anpassung der Reinigungsvorrichtung an die üblichen Feldgrößen von Solar- bzw. Photovoltaikanlagen erfolgen. Des Weiteren kann beispielsweise bei ausreichender Länge der Halterung 21 eine in Längsrichtung der Halterung 21 vorgesehene Verstellbarkeit der beiden stirnseitig eingreifenden Antriebseinheiten 15, 17 vorgesehen sein, die dazu dient, mit ein und derselben Vorrichtung unterschiedlich lange Reinigungswalzen 13 aufnehmen zu können.

Den prinzipiellen Aufbau einer grundsätzlich bekannten Tellerwaschbürste zeigt Fig. 2.

In einem an einer Seite offenen Gehäuseteil 29 ist eine Antriebsscheibe 25 um eine Drehachse 31 drehbar gelagert. Die Antriebsscheibe 25 befindet sich in einem Arbeitsraum 23, der in axialer Richtung durch das Gehäuseteil 29 und in radialer Richtung durch eine umlaufende Wand 35 begrenzt ist, in der ein Durchbruch 37 ausgebildet ist.

Auf der Antriebsscheibe 25 sind Schaufeln 27 ausgebildet, die mittels des Reinigungsfluids beaufschlagt werden, das von einem Leitungsabschnitt 39, der an seinem freien Ende eine Düse 41 trägt, zugeführt wird. Über einen Anschluss 43 ist der Leitungsabschnitt 39 und damit die Antriebseinheit an eine Fluidquelle anschließbar, insbesondere in der in Fig. 1 dargestellten Weise im Rahmen einer erfindungsgemäßen Reinigungsvorrichtung.

Die Antriebsscheibe 25 ist in dem dargestellten Ausführungsbeispiel drehfest mit einem Zahnrad 33 versehen, das eingangsseitig einer nicht dargestellten Getriebeanordnung vorgesehen ist. Ausgangsseitig ist diese Getriebeanordnung mit der Tellerbürste bzw. einem Träger der Tellerbürste verbunden, worauf hier im Einzelnen nicht näher eingegangen zu werden braucht, da derartige Tellerbürsten grundsätzlich bekannt sind. Durch die Getriebeanordnung kann eine ein- oder mehrfache Untersetzung der Eingangsdrehzahl der Antriebsscheibe 25 erfolgen, die mehrere 1.000 Umdrehungen pro Minute betragen kann.

Erfindungsgemäß wird nun mittels des Zahnrads 33 und der angeschlossenen Getriebeanordnung nicht mehr die Tellerwaschbürste bzw. deren Träger in Rotation versetzt, sondern es wird an den Ausgang der Getriebeanordnung die Reinigungswalze 13 (vgl. Fig. 1) stirnseitig gekoppelt. Die Anbindung der Reinigungswalze 13 an die beiden Antriebseinheiten 15, 17 erfolgt jeweils derart, dass das Reinigungsfluid aus dem Antriebsraum 23 zumindest zum überwiegenden Teil nur in das Innere der Reinigungswalze 13 gelangen kann, um aus den im Walzenmantel vorgesehenen Austrittsöffnungen in vorbestimmter Weise austreten zu können.

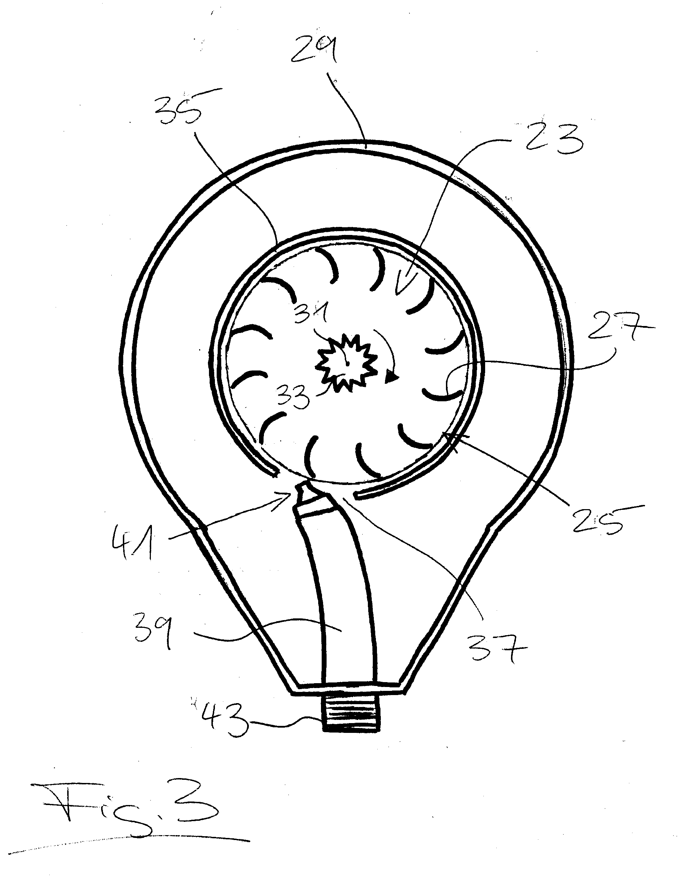

Wie insbesondere aus einem Vergleich der Fig. 2 und 3 ersichtlich ist, kann ein Fluidantrieb mit entgegengesetztem Drehsinn, wie er für die jeweils andere Stirnseite der Reinigungswalze 13 benötigt wird, einfach dadurch realisiert werden, dass der Durchbruch 37 und die Orientierung sowohl des mit der Düse 41 versehenen Leitungsabschnitts 39 als auch der Schaufeln 27 so geändert wird, dass sich eine Rotation der Antriebsscheibe 25 im Uhrzeigersinn (Fig. 3) ergibt. Mit anderen Worten ist bezüglich des Drehsinns die Antriebseinheit der Fig. 3 wie das Spiegelbild der in Fig. 2 dargestellten Antriebseinheit ausgebildet. Eine solche Modifizierung kann auf einfache und kostengünstige Weise realisiert werden.

Da erfindungsgemäß die ohnehin bereits existierenden Antriebseinheiten außerdem eine Mehrzahl von Funktionen erfüllen, können in vorteilhafter Weise Kosten und Gewicht der Reinigungsvorrichtung überraschend gering gehalten werden. So kann gewissermaßen "mit einfachsten Mitteln" unter Verwendung bekannter Komponenten eine preiswerte und leichte Reinigungsvorrichtung realisiert werden, die aufgrund des geringen Eigengewichts für die Reinigung von an geneigten Dächern vorgesehenen Solar- bzw. Photovoltaikanlagenflächen geeignet und aufgrund der relativ geringen Herstellungskosten besonders für Privathaushalte interessant ist.

### Bezugszeichenliste

- 11: Träger
- 13: Reinigungswalze
- 15, 17: Antriebseinheit
- 19: Drehachse
- 20: Hochdruckreiniger
- 21: Halterung, Querträger
- 22: Anschluss
- 23: Arbeitsraum
- 25: Antriebsscheibe
- 27: Schaufel
- 29: Gehäuseteil
- 31: Drehachse
- 33: Zahnrad
- 35: Wand
- 37: Durchbruch
- 39: Leitungsabschnitt
- 41: Düse
- 43: Anschluss

## Patentansprüche

1. Reinigungsvorrichtung, insbesondere zum Reinigen von Solar- oder Photovoltaikanlagenflächen, mit
einem Träger (11),
wenigstens einer an dem Träger (11) drehbar gelagerten Reinigungswalze (13), und
einem Drehantrieb (15, 17) für die Reinigungswalze (13),
wobei der Drehantrieb (15, 17) als Fluidantrieb ausgebildet ist, bei dem die Strömung eines der Reinigungswalze (13) zu Reinigungszwecken zugeführten Reinigungsfluids in eine Antriebsbewegung für die Reinigungswalze (13) umgesetzt wird, und
wobei der Träger (11) als Gabel mit vom Drehantrieb (15, 17) gebildeten Zinken zum Halten der Reinigungswalze (13) ausgebildet ist.

2. Reinigungsvorrichtung nach Anspruch 1,
**dadurch gekennzeichnet,**
**dass** der Drehantrieb zwei Antriebseinheiten (15, 17) umfasst, die jeweils eine Zinke bilden.

3. Reinigungsvorrichtung nach Anspruch 1 oder 2,
**dadurch gekennzeichnet,**
**dass** der Drehantrieb (15, 17) nach dem Prinzip eines Fluidantriebs für eine Tellerwaschbürste ausgebildet ist.

4. Reinigungsvorrichtung nach einem der vorhergehenden Ansprüche,
**dadurch gekennzeichnet,**
**dass** der Drehantrieb (15, 17) ein Bestandteil des Trägers (11) ist.

5. Reinigungsvorrichtung nach einem der vorhergehenden Ansprüche,
**dadurch gekennzeichnet,**
**dass** der Drehantrieb (15, 17) dazu ausgebildet ist, die Reinigungswalze (13) an zumindest einer Stirnseite, bevorzugt an beiden Stirnseiten, zu halten.

6. Reinigungsvorrichtung nach einem der vorhergehenden Ansprüche,
**dadurch gekennzeichnet,**
**dass** der Drehantrieb (15, 17) gleichzeitig im Bereich beider Stirnseiten der Reinigungswalze (13) wirksam ist.

7. Reinigungsvorrichtung nach einem der vorhergehenden Ansprüche,
**dadurch gekennzeichnet,**
**dass** der Drehantrieb zwei mit unterschiedlichem Drehsinn versehene und ansonsten baugleich ausgeführte Antriebseinheiten (15, 17) umfasst.

8. Reinigungsvorrichtung nach einem der vorhergehenden Ansprüche,
**dadurch gekennzeichnet,**
**dass** der Träger (11) eine bevorzugt im Wesentlichen parallel zur Drehachse (19) der Reinigungswalze (13) verlaufende Halterung (21) für Antriebseinheiten (15, 17) des Drehantriebs umfasst, die als gemeinsame Fluidzufuhr für die Antriebseinheiten (15, 17) ausgebildet ist.

9. Reinigungsvorrichtung nach einem der vorhergehenden Ansprüche,
**dadurch gekennzeichnet,**
**dass** der Drehantrieb (15, 17), insbesondere jede Antriebseinheit, dazu ausgebildet ist, das Reinigungsfluid dem Inneren der Reinigungswalze (13) stirnseitig zuzuführen.

10. Reinigungsvorrichtung nach einem der vorhergehenden Ansprüche,
**dadurch gekennzeichnet,**
**dass** der Drehantrieb (15, 17), insbesondere jede Antriebseinheit, einen Arbeitsraum (23) umfasst, dem das Fluid zugeführt und in dem die Fluidströmung in die Antriebsbewegung umgesetzt wird, wobei der Arbeitsraum (23) mit dem Inneren der Reinigungswalze (13) kommuniziert.

11. Verwendung zweier Fluidantriebseinheiten (15, 17) von Tellerwaschbürsten als, insbesondere gleichzeitig im Bereich beider Stirnseiten der Reinigungswalze wirksamer, Drehantrieb für eine an einem Träger (11) drehbar gelagerte Reinigungswalze (13), insbesondere einer Reinigungsvorrichtung nach einem der vorhergehenden Ansprüche,
wobei die beiden Fluidantriebseinheiten (15, 17) mit unterschiedlichem Drehsinn versehen und ansonsten baugleich ausgeführt sind.
